# EUROPÄISCHE PATENTSCHRIFT

(11) **EP 2 523 305 B1**
(45) Veröffentlichungstag und Bekanntmachung des Hinweises auf die Patenterteilung: **18.10.2017**
(21) Anmeldenummer: 11165799.5
(22) Anmeldetag: 12.05.2011
(51) Int. Cl.: H02J 9/06

(54) **Notenergieversorgungseinrichtung und Verfahren zur Notenergieversorgung**
Emergency energy supply device and method for supplying emergency energy
Dispositif d'alimentation d'urgence en énergie et procédé d'alimentation d'urgence en énergie

(43) Veröffentlichungstag der Anmeldung: 14.11.2012
(73) Patentinhaber: Moog Unna GmbH, 59423 Unna (DE)
(72) Erfinder: Theopold, Tobias, 44263 Dortmund (DE)
(74) Vertreter: Schmalz, Günther

(56) Entgegenhaltungen:
- CN-Y- 2 754 255
- DD-A1- 270 796
- US-A1- 2008 084 185
- US-A1- 2009 085 521
- US-B1- 6 175 511
- US-B1- 7 683 752

## Beschreibung

Die Erfindung betrifft eine Notenergieversorgungseinrichtung zur Notenergieversorgung eines Gleichspannungskreises, wobei der Gleichspannungskreis einen ersten Potentialanschluss und einen zweiten Potentialanschluss aufweist, mit einem Energiespeicher, wobei der Energiespeicher einen Pluspol und einen Minuspol aufweist und wobei einer der Pole mit dem ersten Potentialanschluss über eine erste Verbindung verbunden ist und der andere Pol mit dem zweiten Potentialanschluss über eine zweite Verbindung verbunden ist.

Mit der ersten Verbindung und der zweiten Verbindung sind hierbei elektrisch leitende Verbindungen gemeint. Über diese Verbindungen kann die im Energiespeicher gespeicherte Energie über die Pole des Energiespeichers abgegriffen und dem Gleichspannungskreis an den Potentialanschlüssen in Form einer Gleichspannung zur Verfügung gestellt werden.

US 6 175 511 B1 offenbart eine unterbrechungsfreie Stromversorgung, bei der die Spannung eines Gleichstrom-Zwischenkreises nicht unter einen gesetzten Spannungswert fällt und die Menge der eingespeisten elektrischen Energie aus einer Wechselstromquelle einen gesetzten nicht übersteigt, auch wenn die verbrauchte elektrische Leistung einer Last erhöht wird._Die unterbrechungsfreie Stromversorgung weist dabei einen Gleichrichter zum Umwandeln von Wechselstrom in Gleichstrom,_einen Wechselrichter zum Umwandeln des Gleichstroms in einen Wechselstrom zu einer Last, einen sogenannten_stepup / stepdown-Chopper zum Laden und Entladen von Batterien, einen Detektor zur Feststellung einer Serviceunterbrechung der Wechselstromquelle_und eine Steuerschaltung für den Betrieb des stepup / stepdown Chopper als einen stepdown Chopper während der Nicht-Unterbrechung, um die Batterien aufzuladen, und als sogenannter Booster-Chopper zur Bereitstellung von Gleichstrom aus den Batterien als Gleichstromquelle. Wenn dabei die eingespeiste Energie einen Wert übersteigt, arbeitet der stepup / stepdown-Chopper als Booster-Chopper zur Stromversorgung aus den Batterien, wodurch die eingespeiste elektrische Energie von der Wechselstromquelle reduziert wird. Die vorliegende Erfindung offenbart eine Vorrichtung und ein Verfahren entsprechend der unabhängigen Ansprüche. Erfindungsgemäße Ausgestaltungen werden durch die abhängigen Ansprüche offenbart. Notenergieversorgungseinrichtungen zur Notenergieversorgung eines Gleichspannungskreises finden im Stand der Technik zahlreiche Anwendungen. Der häufigste Anwendungsfall ist die Notenergieversorgung des Zwischenkreises eines Umrichters. Derartige Umrichter werden in der Regel mit Dreiphasenwechselstrom aus einem externen Netz gespeist und versorgen einen Verbraucher, zum Beispiel einen Motor, mit Wechselstrom oder Gleichstrom. Bei der Umrichtung des vom externen Netz bereitgestellten Dreiphasenwechselstroms erfolgt zunächst eine Gleichrichtung des Dreiphasenwechselstroms. Die durch die Gleichrichtung erzeugte Gleichspannung liegt im Wechselrichter an einem internen Gleichspannungskreis an. Dieser Gleichspannungskreis wird als Zwischenkreis bezeichnet. Die im Gleichspannungskreis vorliegende Gleichspannung ist über einen ersten Potentialanschluss und über einen zweiten Potentialanschluss abgreifbar. Aus der im Zwischenkreis vorliegenden Gleichspannung wird beispielsweise durch Wechselrichtung ein Wechselstrom zur Versorgung eines Verbrauchers erzeugt. Bei sicherheitsrelevanten Verbrauchern ist es erforderlich, das der Verbraucher auch bei Ausfall des externen Netzes zumindest für einen gewissen Zeitraum weiterbetrieben werden kann. Beispiele für sicherheitsrelevante Verbraucher sind insbesondere die Motoren in Personenfahrstühlen oder die Motoren des Pitchsystems in Windenergieanlagen.

Bei Ausfall des externen Netzes, wie es zum Beispiel bei einem Gebäudebrand vorkommen kann, ist es erforderlich das Personenfahrstühle ohne die vom externen Netz bereitgestellte Energie in der Lage sind zum nächstgelegenen Stockwerk zu fahren und die Türen zu öffnen, damit in dem Fahrstuhl befindliche Personen sich in Sicherheit bringen können. Gängige Antriebsmotoren von Fahrstühlen werden über Umrichter mit Energie versorgt. Um bei Netzausfall die zuvor beschriebene Notfahrt ausführen zu können, werden Fahrstühle üblicherweise mit einer Notenergieversorgungseinrichtung ausgestattet, die den Umrichter im Notfall mit Energie versorgen kann.

Moderne Windenergieanlagen sind in der Regel mit elektrischen Pitchsystemen ausgestattet, die je Rotorblatt einen Motor und einen Umrichter zur Energieversorgung des Motors aufweisen. Durch Rotation der Rotorblätter um ihre jeweilige Längsachse regeln derartige Pitchsysteme die Stellung der Rotorblätter zum Wind und sind häufig die einzige sichere Möglichkeit den Rotor einer Windenergieanlage zum Stillstand zu bringen. Dies geschieht dadurch, dass das Pitchsystem die Rotorblätter in die so genannte Fahnenstellung dreht und der Rotor mangels Antrieb durch den Wind zum Stillstand kommt. Die Energieversorgung des Pitchsystems erfolgt üblicherweise durch das Netz, in das die Windenergieanlage auch den erzeugten Strom einspeist. Bei Netzausfall kann sich eine Gefahrensituation beispielsweise dadurch ergeben, dass bei Zunahme des Windes die Umdrehungsgeschwindigkeit des Rotors der Windenergieanlage einen zulässigen Höchstwert überschreitet und die Windenergieanlage oder in der Nähe befindliche Personen infolgedessen Schaden nehmen könnten.

Um eine derartige Gefahrensituation auch bei Netzausfall abwenden zu können müssen die Rotorblätter auch ohne die Energieversorgung des Pitchsystems durch das externe Netz in die Fahnenstellung verfahrbar sein. Hierzu ist aus dem Stand der Technik bekannt das Pitchsystem mit einer Notenergieversorgungseinrichtung auszustatten, die bei Netzausfall die Energieversorgung des Pitchsystems und somit die Einsatzfähigkeit des Pitchsystems gewährleistet, zumindest bis die Rotorblätter in die sichere Fahnenstellung gebracht worden sind. Bei einem Gleichstrommotor kann die Notenergieversorgungseinrichtung im Notfall auch direkt an den Gleichstrommotor angeschlossen werden.

Bei Anschluss einer Notenergieversorgungseinrichtung an den Zwischenkreis eines Umrichters ergibt sich jedoch ein Sicherheitsproblem. Häufig werden Batterien als Notenergieversorgungseinrichtung verwendet. Da der Zwischenkreis eine variable Spannung aufweisen kann, die auch deutlich über der von den Batterien bereitgestellten Spannung liegen kann, werden die Batterien meist nicht direkt an den Zwischenkreis angeschlossen, um eine Überladung der Batterien zu vermeiden. Um einen Ladestromfluss aus dem Zwischenkreis in die Batterien zu verhindern, werden in den Verbindungsleitungen zwischen den Polen der Batterie und den Potentialanschlüssen des Zwischenkreises ein oder mehrere Entkopplungsbauteile eingebaut. Aufgabe der Entkopplungsbauteile ist es somit einen Stromfluss der einer Ladung der Batterien entspricht, d.h. einen Ladestromfluss, zu unterbinden, aber einen Stromfluss der einer Entladung der Batterien entspricht, d.h. einen Entladestromfluss, zuzulassen. Ein Entladestromfluss entspricht gerade dem bestimmungsgemäßen Einsatz der Batterien, nämlich der Notenergieversorgung des Gleichspannungskreises im Notfall. In der Regel werden für die Entkopplung Dioden oder Reihenschaltungen von Dioden verwendet, die aufgrund der Funktion als Entkopplungsbauteil auch als Entkopplungsdioden bezeichnet werden. Bei den verwendeten Dioden handelt es sich in der Regel um so genannte Leistungsdioden, die für die auftretenden hohen Spannungen und Ströme besonders geeignet sind. Eine Alternative zum Einsatz von Batterien als Notenergieversorgungseinrichtung ist die Verwendung von Kondensatoren. Doch ebenso wie Batterien können auch Kondensatoren durch zu hohe vom Zwischenkreis bereitgestellte Spannungen Schaden nehmen.

Aufgrund von zum Beispiel Bauteilfehlern, Alterungsprozessen oder Überlastung kann es dazu kommen das die verwendeten Entkopplungsbauteile ausfallen. Außergewöhnlich hohe Spannungen in Sperrrichtung der Entkopplungsbauteile sind eine wesentliche Ursache für einen möglichen Ausfall der Entkopplungsbauteile Ein Ausfall kann insbesondere darin bestehen, dass es zu einem Durchbruch in einer verwendeten Entkopplungsdiode kommt. Durch einen derartigen Durchbruch wird die Entkopplungsdiode in Sperrrichtung leitend und ist nicht mehr in der Lage einen Ladestromfluss zu unterbinden. Kommt es durch Ausfall der Entkopplungsbauteile zu einem unkontrollierten fließenden Ladestrom kann eine Überladung der Batterien einsetzen. Bei einer Überladung der Batterien kann Wasserstoff aus den Batterien ausgasen. Hierdurch ergibt sich ein erhebliches Sicherheitsrisiko, da das Wasserstoffgas mit der umgebenden Atmosphäre ein explosionsfähiges Gemisch bilden kann und leicht von den in der Windenergieanlage üblicherweise vorhandenen Zündquellen entzündet werden kann. Befinden sich die Batterien in einem geschlossen Behältnis kann allein die ausgasungsbedingte Druckentwicklung innerhalb des Behältnisses ein Bersten des Behältnisses herbeiführen, wobei erhebliche Schäden - auch durch nachfolgende Entzündung des aus dem geborstenen Behältnis ausgetretenen Wasserstoffgases - innerhalb der Windenergieanlage angerichtet werden können. Bei sehr hohen Drücken kann es sogar zu einer Selbstentzündung kommen.

Damit ist es die Aufgabe der Erfindung, eine Notenergieversorgungseinrichtung und ein Verfahren zur Notenergieversorgung anzugeben, die eine hohe Sicherheit gewährleisten und kostengünstig sind.

Die zuvor hergeleitete und aufgezeigte Aufgabe ist ausgehend von der eingangs beschriebenen Notenergieversorgungseinrichtung dadurch gelöst, dass wenigstens eine der Verbindungen eine direktionale Strommesseinrichtung aufweist und wenigstens eine der Verbindungen eine Unterbrechungseinrichtung aufweist, wobei durch die direktionale Strommesseinrichtung ein Ladestromfluss messbar ist, durch die Unterbrechungseinrichtung ein Ladestromfluss unterbindbar ist und die Unterbrechungseinrichtung in Abhängigkeit des gemessenen Ladestromflusses steuerbar ist.

Eine direktionale Strommesseinrichtung ist hierbei eine Einrichtung, die in der Lage ist den in einer definierten Richtung fließenden absoluten Stromfluss in einer der elektrisch leitenden Verbindungen zwischen dem Energiespeicher und dem Gleichspannungskreis zu messen. Hierdurch vermag die direktionale Strommesseinrichtung festzustellen, ob ein für den Energiespeicher möglicherweise schädlicher Ladestrom fließt. Die Richtung in der die direktionale Strommesseinrichtung den Stromfluss messen kann bestimmt sich demnach nach der Einbausituation der direktionalen Strommesseinrichtung und des Energiespeichers, insbesondere der Polung des Energiespeichers.

Im Rahmen der Erfindung liegt auch, dass die direktionale Strommesseinrichtung in der Lage ist sowohl den absoluten Stromfluss zu messen, als auch die Richtung des Stromflusses zu messen. In diesem Falle kann die direktionale Strommesseinrichtung unterscheiden ob ein möglicherweise für den Energiespeicher schädlicher Ladestromfluss, ein unschädlicher Entladestromfluss oder überhaupt kein Stromfluss vorliegt. Im Falle eines Ladestromflusses ist der Stromfluss durch die Unterbrechungseinrichtung unterbindbar. Hierzu ist es vorgesehen, dass die Information über den gemessen Ladestromfluss von der direktionalen Strommesseinrichtung direkt an die Unterbrechungseinrichtung oder an eine übergeordnete Steuerungseinrichtung weiterleitbar ist und die Unterbrechungseinrichtung folglich in Abhängigkeit des gemessenen Ladestromflusses unmittelbar bzw. mittelbar über die Steuerungseinrichtung steuerbar ist.

Mit der erfindungsgemäßen Notenergieversorgungseinrichtung kann auch ein durch einen Kurzschluss zwischen der Verbindung von der direktionalen Strommesseinrichtung zu einem der Pole der Batterie und dem Erdpotential verursachter Ladestromfluss detektiert werden. Ein durch einen derartigen Kurzschluss verursachter Ladestrom fließt nämlich ebenfalls über die direktionale Strommesseinrichtung. Eine Ausführungsform einer Notenergieversorgungseinrichtung außerhalb der Erfindung hat den Vorteil, dass auf die im Stand der Technik übliche Verwendung von Entkopplungsbauteilen verzichtet werden kann, wodurch sich ein erheblicher Kostenvorteil ergibt. Des Weiteren ist der sichere Betrieb der Notenergieversorgungseinrichtung gewährleistet, da durch die Zusammenarbeit der direktionalen Strommesseinrichtung und der Unterbrechungseinrichtung ein möglicherweise schädlicher Ladestrom unterbunden werden kann.

Die Notenergieversorgungseinrichtung nach der Lehre der Erfindung beschränkt sich nicht nur auf Energiespeicher, die durch einen Ladestrom schaden nehmen können, sondern ermöglicht grundsätzlich auch ein kontrollierte Ladung von Energiespeichern, wie zum Beispiel Kondensatoren. Dass durch die Unterbrechungseinrichtung ein Ladestromfluss unterbindbar ist, kann bedeuten, dass die Unterbrechungseinrichtung lediglich zwischen zwei Zuständen - leitend und nicht leitend - umschalten kann. Im Rahmen der Erfindung liegt jedoch insbesondere auch, das die Leitfähigkeit der Unterbrechungseinrichtung in einem Bereich zwischen diesen beiden Extremen eingestellt werden kann und somit, ein Ladestromfluss präzise steuerbar ist.

Dabei ist vorgesehen, dass die direktionale Strommesseinrichtung ein Entkopplungsbauteil, eine Bypassdiode und ein Strommesselement aufweist, wobei die Bypassdiode und das Strommesselement in Reihe geschaltet sind und das Entkopplungsbauteil parallel zu der Reihenschaltung aus der Bypassdiode und dem Strommesselement geschaltet ist, wobei die Verbindung zwischen dem Energiespeicher und dem Gleichspannungskreis, in der nicht die direktionale Strommesseinrichtung vorgesehen ist, ein weiteres Entkopplungsbauteil aufweist.

Hierbei ist die Bypassdiode derart geschaltet, dass sie für einen möglicherweise schädlichen Ladestrom durchlässig und für einen Entladestrom sperrend ist. Hierdurch wird gewährleistet, dass das Strommesselement ausschließlich Ladestromflüsse misst. Daher ist es ausreichend, wenn das Strommesselement lediglich zu einer einfachen Strommessung in der Lage ist und insbesondere nicht die Richtung des Stromflusses detektieren kann. Im Falle eines durch das Strommesselement detektierten unzulässigen Ladestromflusses ist der Ladestromfluss über die

Unterbrechungseinrichtung unterbindbar. Ein zulässiger Entladestrom fließt erfindungsgemäß über das Entkopplungsbauteil und wird von dem Strommesselement nicht detektiert.

Ein wesentlicher Vorteil liegt darin, dass aus dem Stand der Technik bekannte Notenergieversorgungseinrichtungen, die wenigstens ein Entkopplungsbauteil aufweisen einfach zur erfindungsgemäßen Notenergieversorgungseinrichtung nachgerüstet werden können. Dies geschieht einfach dadurch, dass parallel zu dem bereits vorhandenen Entkopplungsbauteil die Reihenschaltung aus dem Strommesselement und der Bypassdiode installiert werden und eine Unterbrechungseinrichtung, falls nicht vorhanden, installiert wird.
Eine vorteilhafte Ausgestaltung der Erfindung zeichnet sich dadurch aus, dass die Unterbrechungseinrichtung durch das Strommesselement gebildet wird.
Durch diese funktionale Integration der Unterbrechungseinrichtung in das Strommesselement kann ein separates Bauteil für die Unterbrechungseinrichtung eingespart werden. Auch sonst notwendige Verbindungsleitungen zwischen dem Strommesselement und der Unterbrechungseinrichtung entfallen. Diese erfindungsgemäße Ausgestaltung hat daher zum Vorteil, dass die Notenergieversorgungseinrichtung besonders günstig und einfach hergestellt werden kann. Ebenso vereinfacht sich die Nachrüstung von bereits hergestellten Notenergieversorgungseinrichtungen.

Gemäß einer besonders vorteilhaften Weiterbildung der Erfindung ist vorgesehen, dass das Strommesselement eine Sicherung aufweist. Durch eine Sicherung innerhalb des Strommesselements lässt sich besonders einfach die Unterbrechungseinrichtung in das Strommesselement integrieren. Hierbei ist die Sicherung derart ausgelegt, dass die Strommessung durch die Sicherung selbst erfolgt. Fließt kein oder ein vernachlässigbarer Ladestrom ist die Sicherung im leitenden Zustand. Fließt ein Ladestrom der größer ist als der Auslösestrom der Sicherung geht die Sicherung in den nicht leitenden Zustand über. Hieraus ist direkt ersichtlich, dass die Sicherung nicht nur eine - wohlgemerkt äußerst einfache - Strommessung ausführt, sondern zugleich als

Unterbrechungseinrichtung fungiert, indem sie bei zu hohem Stromfluss den Stromfluss unterbricht und so einen möglicherweise schädlichen Ladestromfluss unterbindet. Grundsätzlich kommen als Sicherung alle gängigen Bauformen von Sicherungen in Frage, insbesondere auch Schmelzsicherungen. Schmelzsicherungen haben hierbei zwar einerseits den Nachteil, dass sie bei Auslösung zerstört werden und nicht wieder in den leitenden Zustand versetzt werden können, jedoch bieten sie andererseits eine sehr hohe Zuverlässigkeit und geringe Bauteilkosten. Im Gegensatz insbesondere zu Sicherungsautomaten sind Schmelzsicherungen in der Lage große Ströme bei großen Spannungen sicher zu trennen.

Bei einer bevorzugten Ausgestaltung der Erfindung ist vorgesehen, dass das Strommesselement einen Kaltleiter aufweist.

Hierbei ist mit Kaltleiter ein Bauteil gemeint, dessen Widerstand mit steigender Temperatur ebenfalls ansteigt. Insbesondere ist der Kaltleiter derart ausgelegt, dass der Kaltleiter sich bei einem nicht vernachlässigbaren Ladestrom derart erwärmt, dass der mit der Erwärmung ansteigende Widerstand den Ladestromfluss hinreichend unterbindet.

Gemäß einer weiteren bevorzugten Ausgestaltung der Erfindung ist vorgesehen, dass das Strommesselement mit einer Signaleinrichtung verbunden ist und über die Signaleinrichtung Informationen über den Zustand des Strommesselements ausgebbar sind.

Darüber hinaus ist es vorteilhaft, wenn wenigstens eine der Verbindungen wenigstens einen Schalter aufweist, wobei der Schalter in Abhängigkeit der über die Signaleinrichtung ausgebbaren Informationen über den Zustand des Strommesselements steuerbar ist.

Hierzu kann eine mittelbare oder unmittelbare Verbindung zwischen der Signaleinrichtung und dem Schalter vorgesehen sein, über die die Informationen über den Zustand des Strommesselements übermittelbar sind. Informationen über den Zustand können sowohl konkrete Messwerte, wie zum Beispiel Stromstärke oder Stromrichtung, umfassen als auch Eigenschaften des Strommesselements betreffen, beispielsweise über die Einsatzbereitschaft des Strommesselements.
Gemäß einer weiteren bevorzugten Weiterbildung der Erfindung ist vorgesehen, dass der Gleichspannungskreis eine Steuereinrichtung aufweist und die Signaleinrichtung zur Weitergabe von Informationen über den Zustand des Strommesselements an die Steuereinrichtung mit der Steuereinrichtung verbunden ist.
Hierzu kann eine mittelbare oder unmittelbare Verbindung zwischen der Signaleinrichtung und der Steuereinrichtung vorgesehen sein, über die die Informationen über den Zustand des Strommesselements übermittelbar sind. Über die Steuereinrichtung sind anhand der übermittelten Informationen der Gleichspannungskreis und/oder weitere der Steuerungseinrichtung zugeordnete Einrichtungen steuerbar. Insbesondere kann die Steuerungseinrichtung Bestandteil eines Umrichters zur Energieversorgung eines oder mehrerer Verbraucher sein und der Steuerung des Umrichters und/oder des Verbrauchers dienen.
Bei einer vorteilhaften Ausgestaltung der Erfindung ist vorgesehen, dass wenigstens eine der Verbindungen ein Entkopplungsbauteil aufweist.
Durch das Vorsehen mehrerer Entkopplungsbauteile in den Verbindungen zwischen dem Energiespeicher und dem Gleichspannungskreis lässt sich die Sicherheit der erfindungsgemäßen Notenergieversorgungseinrichtung in der Regel weiter erhöhen.

Eine besonders vorteilhaft Konfiguration ergibt sich, wenn die direktionale Strommesseinrichtung ein Entkopplungsbauteil, eine Bypassdiode und ein Strommesselement aufweist, wobei die Bypassdiode und das Strommesselement in Reihe geschaltet sind und das Entkopplungsbauteil parallel zu der Reihenschaltung aus der Bypassdiode und dem Strommesselement geschaltet ist und wobei die Verbindung zwischen dem Energiespeicher und dem Gleichspannungskreis, in der nicht die direktionale Strommesseinrichtung vorgesehen ist, ein weiteres Entkopplungsbauteil aufweist.

Durch Fehler im Gleichspannungskreis kann es dazu kommen, dass das Spannungsniveau im Gleichspannungskreis kurzfristig oder dauerhaft stark ansteigt. Diese Spannungsspitzen liegen an den Potentialanschlüssen des Gleichspannungskreises, an denen die Verbindungen zwischen dem Energiespeicher und dem Gleichspannungskreis angeschlossen sind, an.

Das in der Strommesseinrichtung enthaltene Entkopplungsbauteil ist dadurch, dass es parallel zu der Reihenschaltung aus der Bypassdiode und dem Strommesselement geschaltet ist, vor Spannungsspitzen die in Sperrrichtung des Entkopplungsbauteils anliegen weitestgehend geschützt. Lediglich das weitere Entkopplungsbauteil ist in Sperrrichtung auftretenden Spannungsspitzen voll ausgesetzt. Ein Ausfall bedingt durch außergewöhnlich hohe in Sperrrichtung auftretende Spannungen betrifft daher in der Regel als erstes das weitere Entkopplungsbauteil. Erfolgt ein Ausfall des weiteren Entkopplungsbauteils bei dem das weitere Entkopplungsbauteil leitend wird, kann kurzzeitig ein Ladestromfluss auftreten. Dieser Ladestromfluss wird aber von dem Strommesselement detektiert und von der Unterbrechungseinrichtung daraufhin unterbunden. Folglich gibt der auftretende Ladestrom indirekt Auskunft über den Ausfall des weiteren Entkopplungsbauteils. Durch die Messung des kurzzeitig auftretenden Ladestromflusses mit dem Strommesselement ist somit indirekt eine Information über den Ausfall des weiteren Entkopplungsbauteils erhältlich. Über die Signaleinrichtung ist die Ausgabe dieser Information möglich.

Gemäß einer weiteren vorteilhaften Ausgestaltung der Erfindung ist vorgesehen, dass wenigstens eines der Entkopplungsbauteile jeweils durch wenigstens eine Diode gebildet wird.

Die Verwendung von mehreren in Reihe geschalteten Dioden als Entkopplungsbauteil verringert die Ausfallwahrscheinlichkeit eines Entkopplungsbauteils gegenüber der Verwendung einer einzelnen Diode, da eine anliegende Spannung in Sperrrichtung ihren Spannungsabfall auf die mehreren Dioden verteilt und somit jede einzelne Diode einer geringeren Belastung ausgesetzt ist. Die Verteilung des Spannungsabfalls erfolgt hierbei jedoch nicht gleichmäßig sondern asymmetrisch auf die mehreren Dioden.

Die zuvor hergeleitete und aufgezeigte Aufgabe ist ausgehend von dem eingangs beschriebenen Verfahren zur Notenergieversorgung auch dadurch gelöst, dass bei Messung eines unerwünschten Ladestromflusses die Unterbrechungseinrichtung derart angesteuert wird, dass die Unterbrechungseinrichtung den unerwünschten Ladestromfluss unterbindet.

Hierbei erfolgt die Messung des Ladestromflusses üblicherweise durch die direktionale Strommesseinrichtung. Wird ein Ladestromfluss festgestellt, der über eine vernachlässigbare Größe hinausgeht und somit möglicherweise schädlich für den Energiespeicher sein könnte, wird die Information über den gemessenen Ladestromfluss mittelbar oder unmittelbar dazu verwendet die Unterbrechungseinrichtung derart anzusteuern, dass die Unterbrechungseinrichtung den möglicherweise schädlichen Ladestromfluss unterbindet.

Das Verfahren zur Notenergieversorgung nach der Lehre der Erfindung beschränkt sich nicht nur auf Energiespeicher, die durch einen Ladestromfluss schaden nehmen können, sondern ermöglicht grundsätzlich auch ein kontrollierte Ladung von Energiespeichern, wie zum Beispiel Kondensatoren. Deshalb kann ein Ladestromfluss unter gewissen Umständen, zum Beispiel wenn er dem Laden des Energiespeichers dient und/oder in Grenzen bleibt die unschädlich für den Energiespeicher sind, zugelassen werden.

Gemäß einer vorteilhaften Weiterbildung der Erfindung ist vorgesehen, dass das Strommesselement mit einer Signaleinrichtung verbunden ist und über die Signaleinrichtung Informationen über den Zustand des Strommesselements ausgegeben werden.

Eine vorteilhafte Ausgestaltung der Erfindung zeichnet sich dadurch aus, dass wenigstens eine der Verbindungen wenigstens einen Schalter aufweist, wobei der Schalter in Abhängigkeit der über die Signaleinrichtung ausgegebenen Informationen über den Zustand des Strommesselements gesteuert wird.

Mit Hilfe eines derartigen Schalters kann der Energiespeicher von dem Gleichspannungskreis zuverlässig getrennt werden. Diese Trennung stellt somit eine zusätzliche Sicherheitsmaßnahme dar, um einen unerwünschten Ladestromfluss auch dann unterbinden zu können, wenn die Unterbrechungseinrichtung in ihrer Funktion beeinträchtige ist. Insbesondere schützt eine Trennung des Energiespeichers von dem Gleichspannungskreis mittels des Schalters eventuell in den Verbindungen verbaute Entkopplungsbauteile vor Belastungen durch weiterhin andauernde hohe Spannungen aus dem Gleichspannungskreis.

Gemäß einer besonders vorteilhaften Weiterbildung der Erfindung ist vorgesehen, dass der Gleichspannungskreis eine Steuereinrichtung aufweist und die Signaleinrichtung mit der Steuereinrichtung verbunden ist, wobei über die Signaleinrichtung Informationen über den Zustand des Strommesselements an die Steuereinrichtung weitergegeben werden.

Hierzu kann eine mittelbare oder unmittelbare Verbindung zwischen der Signaleinrichtung und der Steuereinrichtung vorgesehen sein, über die die Informationen über den Zustand des Strommesselements übermittelt werden. Über die Steuereinrichtung werden anhand der übermittelten Informationen der Gleichspannungskreis und/oder weitere der Steuerungseinrichtung zugeordnete Einrichtungen gesteuert.

Im Einzelnen gibt es nun eine Vielzahl von Möglichkeiten, die erfindungsgemäße Notenergieversorgungseinrichtung und das erfindungsgemäße Verfahren zur Notenergieversorgung auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
- Fig. 1: schematisch eine aus dem Stand der Technik bekannte Notenergieversorgungseinrichtung,
- Fig. 2: eine Notenergieversorgungseinrichtung gemäß einer bevorzugten Weiterbildung der Erfindung und
- Fig. 3: eine besonders bevorzugte Ausgestaltung der erfindungsgemäßen Notenergieversorgungseinrichtung.

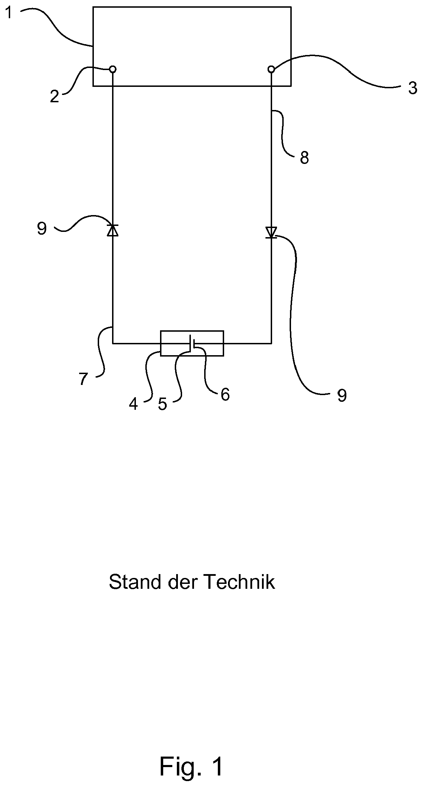

Die in der Fig. 1 dargestellte aus dem Stand der Technik bekannte Notenergieversorgungseinrichtung dient der Notenergieversorgung eines Gleichspannungskreises (1) mit einem ersten Potentialanschluss (2) und einem zweiten Potentialanschluss (3). Der Energiespeicher (4) der Notenergieversorgungseinrichtung weist einen Pluspol (5) und einen Minuspol (6) auf. Hierbei ist der erste Potentialanschluss (2) des Gleichspannungskreises (1) über eine erste Verbindung (7) mit dem Pluspol (5) des Energiespeichers (4) verbunden. Der zweite Potentialanschluss (3) des Gleichspannungskreises (1) ist über eine zweite Verbindung (8) mit dem Minuspol (6) des Energiespeichers (4) verbunden. Sowohl die erste Verbindung (7) als auch die zweite Verbindung (8) weisen eine Entkopplungsdiode (9) auf.

Über die erste Verbindung (7) und die zweite Verbindung (8) kann der Gleichspannungskreis (1) mit Energie aus dem Energiespeicher (4) versorgt werden. Durch die Entkopplungsdioden (9) ist der Energiespeicher (4) vor einer Überladung geschützt. Bei Ausfall der Entkopplungsdioden (9), zum Beispiel durch Alterung, Überlastung oder Herstellungsfehlern, ist der Energiespeicher (4) nicht mehr vor einer Überladung geschützt.

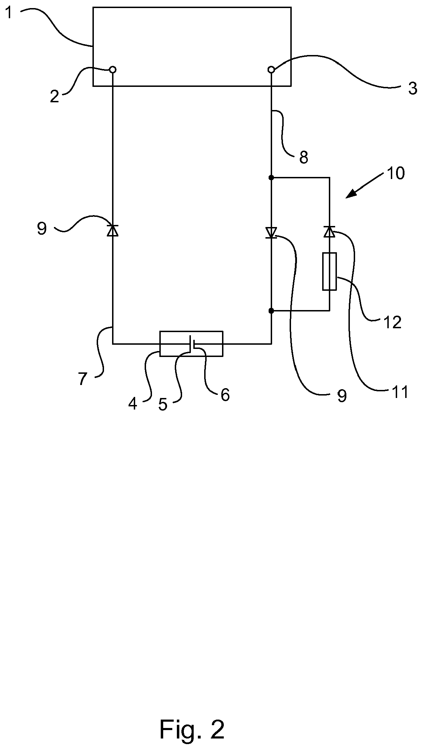

Die Fig. 2 zeigt eine bevorzugte Weiterbildung der Erfindung mit einer direktionalen Strommesseinrichtung (10) und einer Unterbrechungseinrichtung. Die direktionale Strommesseinrichtung (10) ist in die zweite Verbindung (8) eingebaut und weist ein Entkopplungsbauteil, eine Bypassdiode (11) und ein Strommesselement (12) auf. Das Entkopplungsbauteil wird durch eine Entkopplungsdiode (9) gebildet. Ein weiteres Entkopplungsbauteil (9) ist in der ersten Verbindung (7) verbaut. Das Strommesselement (12) ist als eine Schmelzsicherung ausgebildet und fungiert daher auch als die Unterbrechungseinrichtung. Das durch die Entkopplungsdiode (9) gebildete Entkopplungsbauteil ist parallel zu der Reihenschaltung aus dem Strommesselement (12) und der Bypassdiode (11) geschaltet.

Die Notenergieversorgungseinrichtung der Fig. 2 unterscheidet sich von der Notenergieversorgungseinrichtung der Fig. 1 lediglich durch das als Schmelzsicherung ausgebildete Strommesselement (12) und die Bypassdiode (11). Dieser geringe Unterschied zu der im Stand der Technik üblichen Konfiguration, die in Fig. 1 dargestellt ist, ermöglicht eine einfache und kostengünstige Nachrüstbarkeit von bereits gemäß dem Stand der Technik hergestellten Notenergieversorgungseinrichtungen. Bei Ausfall der in der ersten Verbindung (7) angeordneten weiteren Entkopplungsdiode (9) fließt unter Umständen ein Ladestrom vom Minuspol (5) des Energiespeichers (4) über das Strommesselement (12) und die Bypassdiode (11) zum zweiten Potentialanschluss (3) des Gleichspannungskreises (1). Übersteigt der Ladestromfluss einen bestimmten Wert brennt die Sicherung, die das Strommesselement (12) bildet und als Unterbrechungseinrichtung fungiert, durch. Über die Entkopplungsdiode (9) in der zweiten Verbindung ist ein weiterer Ladestromfluss nicht möglich, da diese Diode für einen Ladestromfluss in Sperrrichtung geschaltet ist.

Bei einem Kurzschluss zwischen dem Minuspol (6) des Energiespeichers (4) und einem nicht eingezeichneten Erdpotential kann in Abhängigkeit des Potentials des zweiten Potentialanschlusses (3) des Gleichspannungskreises (1) ein Ladestrom vom Erdpotential zum zweiten Potentialanschluss (3) des Gleichspannungskreises (1) über das Strommesselement (12) und die Bypassdiode (11) fließen. Ein durch einen derartigen Kurzschluss verursachter Ladestromfluss ist daher durch das Strommesselement (12) messbar. Übersteigt der Ladestromfluss einen bestimmten Wert brennt die Sicherung, die das Strommesselement (12) bildet, durch und unterbricht somit den durch den Kurzschluss verursachten Ladestromfluss.

Ebenso kann ein Kurzschluss zwischen dem Pluspol (5) des Energiespeichers (4) und dem nicht eingezeichneten Erdpotential auftreten. Liegt in diesem Fall der erste Potentialanschluss (2) des Gleichspannungskreises (1) auf einem höheren Potential als das Erdpotential, wird ein Stromfluss von dem ersten Potentialanschluss (2) des Gleichspannungskreises (1) zum Erdpotential von der Entkopplungsdiode (9) unterbunden. Liegt jedoch der zweite Potentialanschluss (3) des Gleichspannungskreises (1) auf einem niedrigeren Potential als dem Differenzpotential zwischen dem Pluspol (5) und dem Minuspol (6) des Energiespeichers (4), so kann ein Ladestrom über das Strommesselement (12) und die Bypassdiode (11) fließen. Auch ein auf diese Weise zustande gekommener Ladestromfluss ist durch das Strommesselement (12) messbar. Übersteigt der Ladestromfluss einen bestimmten Wert brennt die Sicherung, die das Strommesselement (12) bildet, durch und unterbricht somit den durch den Kurzschluss verursachten Ladestromfluss.

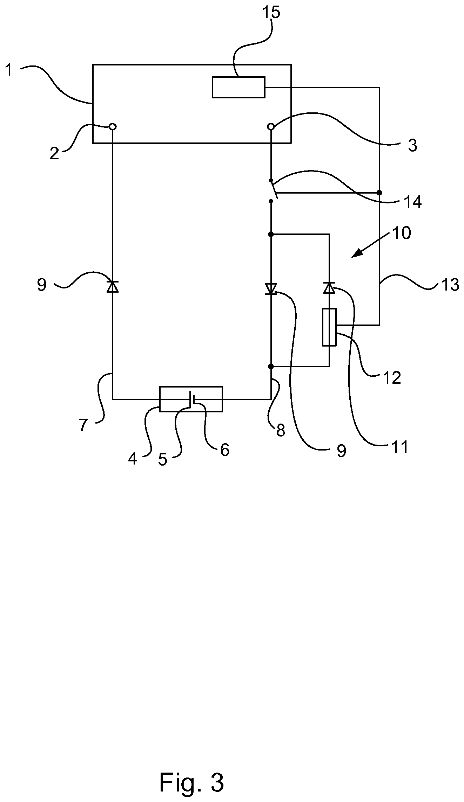

Die in der Fig. 3 dargestellte Notenergieversorgungseinrichtung arbeitet nach dem gleichen Prinzip, wie die Notenergieversorgungseinrichtung der Fig. 2. Zusätzlich verfügt die Notenergieversorgungseinrichtung nach Fig. 3 über eine Signaleinrichtung (13) über die Informationen über den Zustand des Strommesselements (12) ausgebbar sind. Die über die Signaleinrichtung (13) ausgegebenen Informationen über den Zustand des Strommesselements (12) können einem in der zweiten Verbindung (8) angeordneten Schalter (14) zur Verfügung gestellt werden. Der Schalter (14) kann hierbei derart gesteuert werden, dass im Falle eines möglicherweise schädlichen Ladestromflusses der Schalter (14) geöffnet wird, so dass die zweite Verbindung (8) sicher unterbrochen und so der Energiespeicher (4) zuverlässig vor einer Überladung geschützt ist.

Ebenso können die über die Signaleinrichtung (13) ausgegebenen Informationen über den Zustand des Strommesselements (12) einer Steuereinrichtung (15) zur Verfügung gestellt werden. Diese Steuereinrichtung (15) ist in der Fig. 3 als Teil des Gleichspannungskreises (1) dargestellt, kann aber auch außerhalb des Gleichspannungskreises (1) angeordnet sein.

### Bezugszeichenliste

- 1: Gleichspannungskreis
- 2: Erster Potentialanschluss
- 3: Zweiter Potentialanschluss
- 4: Energiespeicher
- 5: Pluspol
- 6: Minuspol
- 7: Erste Verbindung
- 8: Zweite Verbindung
- 9: Entkopplungsdiode
- 10: Direktionale Strommesseinrichtung
- 11: Bypassdiode
- 12: Strommesselement
- 13: Signaleinrichtung
- 14: Schalter
- 15: Steuereinrichtung

## Patentansprüche

1. Notenergieversorgungseinrichtung zur Notenergieversorgung eines Gleichspannungskreises (1), wobei der Gleichspannungskreis (1) einen ersten Potentialanschluss (2) und einen zweiten Potentialanschluss (3) aufweist, mit einem Energiespeicher (4), wobei der Energiespeicher (4) einen Pluspol (5) und einen Minuspol (6) aufweist und wobei einer der Pole (4, 5) mit dem ersten Potentialanschluss (2) über eine erste Verbindung (7) verbunden ist und der andere Pol mit dem zweiten Potentialanschluss (3) über eine zweite Verbindung (8) verbunden ist,
wobei wenigstens eine der Verbindungen (7, 8) eine direktionale Strommesseinrichtung (10) aufweist, die in der Lage ist den in einer definierten Richtung fließenden absoluten Stromfluss in einer der elektrisch leitenden Verbindungen zwischen dem Energiespeicher und dem Gleichspannungskreis zu messen, und wenigstens eine der Verbindungen (7, 8) eine Unterbrechungseinrichtung aufweist, wobei durch die direktionale Strommesseinrichtung (10) ein Ladestromfluss messbar ist, durch die Unterbrechungseinrichtung ein Ladestromfluss unterbindbar ist und die Unterbrechungseinrichtung in Abhängigkeit des gemessenen Ladestromflusses steuerbar ist,
**dadurch gekennzeichnet,**
**dass** die direktionale Strommesseinrichtung (10) ein Entkopplungsbauteil, eine Bypassdiode (11) und ein Strommesselement aufweist, wobei die Bypassdiode (11) und das Strommesselement (12) in Reihe geschaltet sind und das Entkopplungsbauteil parallel zu der Reihenschaltung aus der Bypassdiode (11) und dem Strommesselement (12) geschaltet ist und wobei die Verbindung zwischen dem Energiespeicher und dem Gleichspannungskreis, in der nicht die direktionale Strommesseinrichtung vorgesehen ist, ein weiteres Entkopplungsbauteil aufweist.

2. Notenergieversorgungseinrichtung nach Anspruch 2, **dadurch gekennzeichnet, dass** die Unterbrechungseinrichtung funktional in das Strommesselement (12) integriert ist.

3. Notenergieversorgungseinrichtung nach Anspruch 2, **dadurch gekennzeichnet, dass** das Strommesselement (12) eine Sicherung aufweist.

4. Notenergieversorgungseinrichtung nach Anspruch 2 oder 3, **dadurch gekennzeichnet, dass** das Strommesselement (12) einen Kaltleiter aufweist.

5. Notenergieversorgungseinrichtung nach einem der Ansprüche 1 bis 4, **dadurch gekennzeichnet, dass** das Strommesselement (12) mit einer Signaleinrichtung (13) verbunden ist und über die Signaleinrichtung (13) Informationen über den Zustand des Strommesselements (12) ausgebbar sind.

6. Notenergieversorgungseinrichtung nach Anspruch 5, **dadurch gekennzeichnet, dass** wenigstens eine der Verbindungen (7, 8) wenigstens einen Schalter (14) aufweist, wobei der Schalter (14) in Abhängigkeit der über die Signaleinrichtung (13) ausgebbaren Informationen über den Zustand des Strommesselements (12) steuerbar ist.

7. Notenergieversorgungseinrichtung nach einem der Ansprüche 5 oder 6, **dadurch gekennzeichnet, dass** der Gleichspannungskreis (1) eine Steuereinrichtung (15) aufweist und die Signaleinrichtung (13) zur Weitergabe von Informationen über den Zustand des Strommesselements (12) an die Steuereinrichtung (15) mit der Steuereinrichtung (15) verbunden ist.

8. Notenergieversorgungseinrichtung nach einem der Ansprüche 1 bis 7, **dadurch gekennzeichnet, dass** wenigstens eines der Entkopplungsbauteile jeweils durch wenigstens eine Diode gebildet wird.

9. Verfahren zur Notenergieversorgung eines Gleichspannungskreises (1), mit einer Notenergieversorgungseinrichtung nach einem der Ansprüche 1 bis 4,
**dadurch gekennzeichnet,**
**dass** bei Messung eines unerwünschten Ladestromflusses die Unterbrechungseinrichtung derart angesteuert wird, dass die Unterbrechungseinrichtung den unerwünschten Ladestromfluss unterbindet.

10. Verfahren zur Notenergieversorgung nach Anspruch 9, **dadurch gekennzeichnet, dass** das Strommesselement (12) mit einer Signaleinrichtung (13) verbunden ist und über die Signaleinrichtung (13) Informationen über den Zustand des Strommesselements (12) ausgegeben werden.

11. Verfahren zur Notenergieversorgung nach Anspruch 10, **dadurch gekennzeichnet, dass** wenigstens eine der Verbindungen (7, 8) wenigstens einen Schalter (14) aufweist, wobei der Schalter (14) in Abhängigkeit der über die Signaleinrichtung (13) ausgegebenen Informationen über den Zustand des Strommesselements (12) gesteuert wird.

12. Verfahren zur Notenergieversorgung nach Anspruch 10 oder 11, **dadurch gekennzeichnet, dass** der Gleichspannungskreis (1) eine Steuereinrichtung (15) aufweist und die Signaleinrichtung (13) mit der Steuereinrichtung (15) verbunden ist, wobei über die Signaleinrichtung (13) Informationen über den Zustand des Strommesselements (12) an die Steuereinrichtung (15) weitergegeben werden.

## Claims

1. Emergency power supply device for the emergency power supply of a DC voltage circuit (1), wherein the DC voltage circuit (1) has a first potential tap (2) and a second potential tap (3), with an energy store (4), wherein the energy store (4) has a positive pole (5) and a negative pole (6), and wherein one of the poles (4, 5) is connected to the first potential tap (2) via a first connection (7) and the other pole is connected to the second potential tap (3) via a second connection (8),
wherein at least one of the connections (7, 8) has a directional current measuring device (10), which is capable of measuring the absolute current flow flowing in a defined direction in one of the electrically conductive connections between the energy store and the DC voltage circuit, and at least one of the connections (7, 8) has a disconnect device, wherein a charging current flow can be measured by the directional current measuring device (10), a charging current flow can be suppressed by the disconnect device, and the disconnect device can be controlled as a function of the measured charging current flow,
**characterized in that**
the directional current measuring device (10) has a decoupling component, a bypass diode (11), and a current measuring element, wherein the bypass diode (11) and the current measuring element (12) are connected in series, and the decoupling component is connected parallel to the series circuit from the bypass diode (11) and the current measuring element (12), and wherein the connection between the energy store and the DC voltage circuit, in which the directional current measuring device is not provided, has a further decoupling component.

2. Emergency power supply device according to claim 2, **characterized in that** the disconnect device is functionally integrated into the current measuring element (12).

3. Emergency power supply device according to claim 2, **characterized in that** the current measuring element (12) has a fuse.

4. Emergency power supply device according to either claim 2 or 3, **characterized in that** the current measuring element (12) has a PTC thermistor.

5. Emergency power supply device according to one of claims 1 through 4, **characterized in that** the current measuring element (12) is connected to a signaling device (13), and information can be generated regarding the status of the current measuring element (12) via the signaling device (13).

6. Emergency power supply device according to claim 5, **characterized in that** at least one of the connections (7, 8) has at least one switch (14), wherein the switch (14) can be controlled as a function of the information regarding the state of the current measuring element (12) generated via the signaling device (13).

7. Emergency power supply device according to one of claims 5 or 6, **characterized in that** the DC voltage circuit (1) has a control device (15), and the signaling device (13) is connected to the control device (15) in order to forward information regarding the state of the current measuring element (12) to the control device (15).

8. Emergency power supply device according to one of claims 1 through 7, **characterized in that** at least one of the decoupling components is formed by at least one diode.

9. Method for the emergency power supply of a DC voltage circuit (1), with an emergency power supply device according to one of claims 1 through 4,
**characterized in that**,
when an undesirable charging current flow is measured, the disconnect device is actuated such that the disconnect device suppresses the undesirable charging current flow.

10. Method for emergency power supply according to claim 9, **characterized in that** the current measuring element (12) is connected to a signaling device (13), and information can be generated regarding the status of the current measuring element (12) via the signaling device (13).

11. Method for emergency power supply according to claim 10, **characterized in that** at least one of the connections (7, 8) has at least one switch (14), wherein the switch (14) is controlled as a function of the information regarding the state of the current measuring element (12) generated via the signaling device (13).

12. Method for emergency power supply according to either claim 10 or 11, **characterized in that** the DC voltage circuit (1) has a control device (15), and the signaling device (13) is connected to the control device (15), wherein information regarding the state of the current measuring element (12) is forwarded to the control device (15) via the signaling device (13).

## Revendications

1. Équipement d'alimentation en énergie de secours pour la fourniture d'énergie de secours pour un circuit de tension continue (1), dans lequel le circuit de tension continue (1) comporte une première borne de potentiel (2) et une seconde borne de potentiel (3), avec un accumulateur d'énergie (4), dans lequel l'accumulateur d'énergie (4) comportant un pôle positif (5) et un pôle négatif (6) et dans lequel l'un des pôles (4, 5) est raccordé à la première borne de potentiel (2) par l'intermédiaire d'une première connexion (7) et l'autre pôle à la seconde borne de potentiel (3) par l'intermédiaire d'une deuxième connexion (8),
dans lequel au moins l'une des connexions (7, 8) comporte un dispositif de mesure de courant directionnel (10) qui est capable de mesurer le courant absolu circulant dans une direction définie dans l'une des connexions électriquement conductrices entre l'accumulateur d'énergie et le circuit de tension continue, et au moins l'une des connexions (7, 8) comporte un dispositif d'interruption, par lequel il est possible, par l'intermédiaire du dispositif de mesure de courant directionnel (10), de mesurer un flux de courant de charge, et possible, par le dispositif d'interruption, d'interrompre un flux de courant charge et où le dispositif d'interruption est commandé en fonction du flux du courant de charge mesuré,
**caractérisée en ce que,**
le dispositif de mesure de courant directionnel (10) comporte un élément de découplage, une diode de dérivation (11) et un dispositif de mesure de courant, dans lequel la diode de dérivation (11) et le dispositif de mesure de courant (12) sont connectés en série et le composant de découplage est raccordé en parallèle au circuit série constitué de la diode de dérivation (11) et du dispositif de mesure de courant (12) et dans lequel la connexion, entre l'accumulateur d'énergie et le circuit de tension continue dans laquelle il n'est pas prévu de dispositif de mesure de courant, comporte un autre élément de découplage.

2. Dispositif d'alimentation en énergie de secours selon la revendication 2, **caractérisé en ce que** le dispositif d'interruption est intégré fonctionnellement dans le dispositif de mesure de courant (12).

3. Équipement d'alimentation en énergie de secours selon la revendication 2, **caractérisé en ce que** le dispositif de mesure de courant (12) comporte un fusible.

4. Dispositif d'alimentation en énergie de secours selon la revendication 2 ou 3, **caractérisé en ce que** l'élément de mesure de courant (12) comporte une thermistance CTP.

5. Dispositif d'alimentation en énergie de secours selon l'une des revendications 1 à 4, **caractérisé en ce que** l'élément de mesure de courant (12) est raccordé à un dispositif de signalisation (13) et où il est possible, par l'intermédiaire du dispositif de signalisation (13) de fournir des informations sur l'état du dispositif de mesure de courant (12).

6. Dispositif d'alimentation en énergie de secours selon la revendication 5, **caractérisé en ce que** l'une des connexions au moins (7, 8) comporte un commutateur (14), le dit commutateur (14) est pilotable en fonction des informations fournies par l'intermédiaire du dispositif de signalisation (13) sur l'état du dispositif de mesure de courant (12).

7. Dispositif d'alimentation en énergie de secours selon l'une des revendications 5 ou 6, **caractérisé en ce que** le circuit de tension continue (1) comporte un dispositif de commande (15) et que le dispositif de signalisation (13) est, pour faire passer des informations sur l'état du dispositif de mesure de courant (12) au dispositif de commande (15), relié au dispositif de commande (15).

8. Dispositif d'alimentation en énergie de secours selon l'une des revendications 1 à 7, **caractérisé en ce qu'** un des éléments de découplage au moins est formé par une diode.

9. Processus pour l'alimentation en énergie de secours d'un circuit de tension continue (1), avec un équipement d'alimentation en énergie de secours selon l'une des revendications 1 à 4,
**caractérisée en ce que,**
lors de la mesure d'un flux de courant de charge indésirable, le dispositif d'interruption est commandé de telle sorte que le dispositif d'interruption empêche le flux de courant de charge indésirable.

10. Processus pour l'alimentation en énergie de secours selon la revendication 9, **caractérisé en ce que** le dispositif de mesure de courant (12) est relié à un dispositif de signalisation (13) et par l'intermédiaire du dispositif de signalisation (13) des informations vont être fournies sur l'état du dispositif de mesure de courant(12).

11. Processus pour l'alimentation en énergie de secours selon la revendication 10, **caractérisé en ce que** l'une des connexions au moins (7, 8) comporte un commutateur (14), le dit commutateur (14) est piloté en fonction des informations fournies par l'intermédiaire du dispositif de signalisation (13) sur l'état du dispositif de mesure de courant (12).

12. Processus pour l'alimentation en énergie de secours selon les revendications 10 ou 11, **caractérisé en ce que** le circuit de tension continue (1) comporte un dispositif de commande (15) et que le dispositif de signalisation (13) est relié au dispositif de commande (15), des informations sur l'état du dispositif de mesure de courant (12) étant alors, transmises vers le dispositif de commande (15) par l'intermédiaire du dispositif de signalisation (13).
